# EUROPEAN PATENT APPLICATION

(11) **EP 1 313 344 A2**
(43) Date of publication of application: **21.05.2003**
(21) Application number: 02257767.0
(22) Date of filing: 08.11.2002
(51) Int. Cl.: H04Q 7/38

(54) **Streaming services in radio networks**

(30) Priority: 16.11.2001 GB 0127540
(71) Applicant: Hutchison Whampoa Enterprises Ltd, Road Town (VG)
(72) Inventor: Daneel, Jerome, Maidenhead, Berks SL6 8RG (GB); McCarthy, Andrew, Burpham, Guildord, Surrey GU4 7JN (GB)
(74) Representative: Dawson, Elizabeth Ann

(57) **Abstract**

A packet switched streaming implementation for a WCDMA network in which media information is carried on a separate radio access bearer from control information, whereby only the media information need have real time quality of service.

## Description

The present invention relates to a method of implementing a packet switched streaming service in a wideband code division multiple access (WCDMA) radio network.

Video and music clips are examples of streaming services. Unlike telephone services, streaming services are usually transmitted in only one direction, from the server to the recipient. Streaming services are also characterised by the fact that data must be transmitted in real time so that the recipient can view video footage, for example, as it is transmitted rather than having to wait until a whole video clip has been down loaded before being able to "play" it. Usually, streamed data is played as it is being stored.

Streaming services are now available over the internet so that an internet terminal can be used to watch television programmes. In contrast to traditional broadcasting this requires the facility for the user to be able to send back to the streaming server control signals such as play, pause, etc. In internet applications the media information (e.g. video or audio) and control information are multiplexed onto a single bearer.

The next generation of mobile telephones, namely the third generation or 3G, will have in-built media players. Indeed such telephones are already in use in Japan. Thus it would be desirable for a mobile communications network to support a streaming service whereby video and audio data can be "streamed" to UMTS terminals in real time. However the internet example cannot simply be applied to a mobile telecommunications system.

In the 3G network to be implemented in the United Kingdom, a number of operators are allocated transmission frequency bands. The operator will divide its bands into a number of channels identified by a frequency and a code. A number of radio access bearers (RABs) may be multiplexed onto one channel. A RAB may be regarded as a pipe along which information may flow. A RAB may allow two-way flow, i.e. uplink (UL) and downlink (DL); or one way, i.e. uplink or downlink only.

In the hierarchy of 3G telecommunications protocol, a RAB is a service provided by a radio network controller (RNC) on the request of the core network (CN). A RAB can have real time quality of service or non real time quality of service. For present purposes real time quality of service (RTQoS) can be regarded as a guaranteed bit rate whereas non real time quality of service (NRTQoS) results in a variable bit rate. For example a NRT RAB is more likely to have its bit rate reduced by the RNC to low values at busy time to serve other users. The principle is that the RNC can give to a NRT RAB anything between a very high bit rate and 0 kbps and it may change this dynamically. However the RNC cannot vary the bit rate it gives to a RT RAB.

In a lossy network such as a radio network it is desirable for more control information to be exchanged between terminal and server, such as feedback information relating to the quality of reception to be transmitted from terminal to server.

If control information and media information were multiplexed onto the same bearer, following the internet example, in a radio network there would be a risk of loss of media information leading to an increase in control information which would decrease the available data rate for media information causing an avalanche effect.

Currently within 3GPP release 99 standards no end-to-end implementation is defined to support PS streaming applications with real time (RT), quality of service (QoS), although all the basic elements are provided.

Especially the reference radio access bearers (RAB) with RT QoS defined in the June 2001 version of R99:
can only be associated with the circuit switched (CS) core network (CN),
do not offer any efficient solution to transport the feedback information flows required by main streaming applications,
cannot be associated with other PS RAB.

The present invention provides a method of implementing a streaming service, preferably a packet switched streaming service in a WCDMA radio network in which a transmission frequency band is divided into a number of channels identified by a frequency and a code and a number of radio access bearers are multiplexed onto one channel, the streaming service including the transmission of continuous media information from a server to a terminal and the transmission of control information to and /or from the server and/or the terminal, wherein the media information and the control information are transmitted over separate radio access bearers.

In principle, quality feedback information and command information as described above could be transmitted over separate RABs but in the preferred embodiment of the invention all control information is transmitted over one RAB which is separate from the RAB allocated for media information. Thus, the RAB devoted to media information can be downlink only whereas the control RAB will be uplink and downlink.

Hitherto it has been assumed that both the media and control information in a streaming service should have real time quality of service. However, having separated the media information onto its own RAB, the separate RABs may have different quality of service. Thus the media information may be transmitted over a RAB with real time quality of service and the control information may be transmitted over a RAB predetermined as having non real time quality of service. Since the RNC has control over the allocation of bit rate to the NRT RAB, the RNC can guarantee a certain bit rate to the control information despite it being on a NRT RAB so that the control information has RT-like QoS.

The implementation of the invention will entail certain software changes in a 3G handset. Thus, another aspect of the invention provides a transceiver as defined in claim 8. Preferred features of the transceiver are detailed in claims 9, 10 and 11.

3GPP standards only specify the network and no end-to-end implementation. The present idea is about the architecture of an end-to-end service.

Regarding the air interface, 3GPP standards specify the basic elements to build RAB's and a set of test cases. The present idea proposes an implementation of those basic elements to build new RAB's.

The proposed architecture ensures that an increase in the control information (e.g. due to packet losses in the network) will not result in a decrease of the data rate of the media information.

The solution has also been designed from an end-to-end point of view in order to guarantee the QoS provided to the user while optimising the usage of the radio resources and maximising interoperability.
This solution is new because the streaming applications are currently defined to the internet world, where multiple bearers with differentiated QoS cannot be offered.

It is also new in the UMTS world because 3GPP specifications only define RAB's for interoperability testing from a UTRAN perspective, and not for implementing applications and services from an end-to-end perspective.

Because radio resource management (RRM) rules are not precisely defined in the standards and because streaming applications have not yet being investigated by the UTRAN vendors, their RRM do not optimise radio resources usage in case of streaming. The solution proposed here defines rules to achieve this.

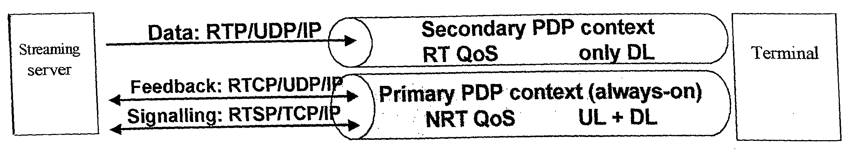

The main idea defines a new architecture for PS streaming services. But this idea defines also:
Use of multiple IP QoS bearers for one application.
PS RAB's with RT QoS at a wide range of bit rates (from 16 to 384 kbps) to carry the media flow.
RAB multiplexing in the radio layer to provide the separation of the media and the control information.
UTRAN behaviour in order to optimise the usage of radio resources.
   Embodiments of the invention will now be described with reference to the accompanying drawing in which is a schematic diagram showing the flow of data between terminal and streaming server.

The table below illustrates software architecture that may be used to implement the present invention.

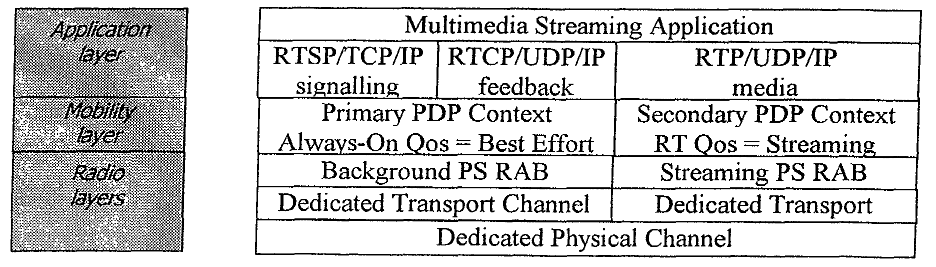

Where:
- RTSP/TCP/IP is the protocol used for the signalling information.
- RTCP/UDP/IP is the protocol used for the real-time feedback.
- RTP/UDP/IP is the protocol used for the real-time media information.
- Primary PDP Context is the default non real time packet bearer used by the 3G terminal.
- Secondary PDP Context is a real time bearer used for real time application like streaming.

The multimedia streamlining application can be regarded as three separate data flows, namely the media content itself, downlink only, signalling and feedback data. The signalling and feedback together constitute what is referred to above as control data. The media and control data are multiplexed onto a streaming RAB and a background RAB respectively which are multiplexed onto separate transport channels. The media information is multiplexed onto a RAB reserved for streaming having guaranteed bit rate and hence quality of service. The control information is multiplexed onto the best effort bearer available at the time. Other internet protocol (IP) applications such as a web browser may be multiplexed onto the same RAB as the streaming control data.

The present idea proposes a way to define new RAB's to carry only the media information with the following characteristics: compliant with 3GPP release 99, unidirectional in the downlink, Streaming QoS, and close to existing 3GPP reference RAB's.

The present idea proposes that each new streaming RAB shall be combined with a NRT RAB, which shall: carry the control information (RTCP and RTSP), be issued from 3GPP reference RAB's, and have a very low to optimise radio resources usage.

The new RAB combinations are detailed in the table below.

| # | RAB1 | RAB2 | SRB | SF | | Stream bit rate |
|---|---|---|---|---|---|---|
| | | | | UL | DL | |
| 1 | Streaming / Unknown / PS UL:0 DL:32 | Interactive or background / PS UL:32 kbps DL:8 | SRBs for DCCH UL:3.4 DL:3.4 | 32 | 32 | 16/32 |
| 2 | Streaming / Unknown / PS UL:0 DL:64 | Interactive or background / PS UL:32 kbps DL:8 | SRBs for DCCH UL:3.4 DL:3.4 | 32 | 32 | 48/64 |
| 3 | Streaming / Unknown / PS UL:0 DL:128 | Interactive or background / PS UL:32 kbps DL:8 | SRBs for DCCH UL:3.4 DL:3.4 | 32 | 16 | 96/128 |
| 4 | Streaming / Unknown / PS UL:0 DL:256 | Interactive or background / PS UL:32 kbps DL:64 | SRBs for DCCH UL:3.4 DL:3.4 | 32 | 8 | 192/256 |

Each RAB combination may also be associated with an AMR voice call at 12.2 kbps to allow the user to receive a voice call while streaming a media content.

Each new combination of RAB1/RAB2 in the table above is based on an existing RAB definition in 3GPP release 99. For each RAB pair a signalling radio bearer (SRB) is required having uplink and downlink bit rates specified as kilobits per second. The following column headed SF details uplink and downlink spreading factors.

The drawing illustrates the two RABs as pipes, the upper pipe being RAB1 carrying media information from server to terminal and the lower pipe being RAB2 carrying control information, i.e. signalling and feedback.

At streaming RAB setup, because terminals are not able of having several simultaneous applications, the RNC shall reconfigure the NRT RAB to the low bit rates specified in the table above.
At streaming RAB release, depending on the expected user traffic after having stream a media content, the RNC shall keep the NRT RAB active but may:
Either move the user to the common channels.
Or reconfigure the NRT radio bearer to the minimum bit rate available on dedicated channel.
Or reconfigure the NRT radio bearer to the maximum bit rate available on dedicated channel.

## Claims

1. A method of implementing a packet switched streaming service in a WCDMA radio network in which a transmission frequency band is divided into a number of channels identified by a frequency and a code and a number of radio access bearers are multiplexed onto one channel, the streaming service including the transmission of continuous media information from a server to a terminal and the transmission of control information to and/or from the server and/or the terminal, wherein the media information and the control information are transmitted over separate radio access bearers (RABs).

2. A method as claimed in claim 1 in which the control information includes quality feedback information exchanged between terminal and server as well as command information from terminal to server.

3. A method as claimed in claim 1 or 2 in which the control information is transmitted over one RAB.

4. A method as claimed in claim 3 in which the media RAB is downlink only and the control RAB is uplink and downlink.

5. A method as claimed in any preceding claim in which the media information is transmitted over a RAB having a guaranteed bit rate.

6. A method as claimed in any preceding claim in which the control information is transmitted over a RAB or RABs having a variable bit rate.

7. A method as claimed in claim 6 in which a minimum bit rate is guaranteed to the control information.

8. A radio transceiver for use in a WCDMA radio network in which a transmission frequency band is divided into a number of channels identified by a frequency and a code and a number of radio access bearers are multiplexed onto one channel, the transceiver having means for receiving continuous media information from a network server and exchanging control information with the server, with the media information and the control information transmitted over separate radio access bearers.

9. A radio transceiver as claimed in claim 8 having means exchanging quality feedback information with the server as well as sending command information to the server, the quality feedback and command information both being included in said control information.

10. A radio transceiver as claimed in claim 8 or 9 in which the whole of the control information is carried on one RAB which is separate from the RAB used for said media information.

11. A radio transceiver as claimed in claim 8, 9 or 10 which is able to receive control information over a RAB or RABs having a variable bit rate.
